Europäisches Patentamt

European Patent Office

Office européen des brevets

(11) Publication number: **0 270 211**
**A2**

# EUROPEAN PATENT APPLICATION

(21) Application number: 87308143.4

(22) Date of filing: 15.09.87

(51) Int. Cl.⁴ **B01J 29/06** , C10G 11/05

(30) Priority: 04.12.86 US 937943

(43) Date of publication of application:
08.06.88 Bulletin 88/23

(84) Designated Contracting States:
AT BE CH DE ES FR GB GR IT LI LU NL SE

(71) Applicant: ENGELHARD CORPORATION
Menlo Park, CN 40
Edison New Jersey 08818(US)

(72) Inventor: Schubert, Paul F.
677 Art Street
Long Branch New Jersey 07740(US)
Inventor: Altomare, Carol A.
25 Sherwood Close
Hillsborough New Jersey 08876(US)

(74) Representative: Geering, Keith Edwin et al
REDDIE & GROSE 16 Theobalds Road
London WC1X 8PL(GB)

(54) Catalytic cracking of metal contaminated feedstock.

(57) Magnesium silicate, magnesium aluminum silicates or iron silicates are present in the circulating inventory of a fluid catalytic cracking unit operated with metal-contaminated feedstock to improve the tolerance of the catalyst to metals.

EP 0 270 211 A2

## CATALYTIC CRACKING OF METAL CONTAMINATED FEEDSTOCK

### BACKGROUND OF THE INVENTION

This invention relates to the catalytic cracking of metal contaminated petroleum feedstocks using a cracking catalyst. In particular, the invention relates to the use of certain anhydrous silicates or aluminum silicates of magnesium or iron to mitigate the adverse effects of vanadium on the activity maintenance and selectivity of fluid crystalline zeolitic cracking catalysts.

It is now widely recognized that various metals in cracker feedstock have a deletrious effect on zeolitic cracking catalysts, especially so when the metals are present at high levels. One of the most troublesome metals is vanadium which is known to react with the zeolitic component of cracking catalysts and reduce the activity of the catalysts, necessitating high catalyst replacement rates to maintain activity in the reaction zone at useful levels. Vanadium is also known to adversely affect the selectivity of zeolitic catalyst, producing coke and hydrogen at the expenses of transportation fuels. Nickel, copper and iron are known to have a deleterious effect on catalyst selectivity.

A recent major advance in fluid catalytic cracking (FCC) has resulted from the ability to produce attrition resistant fluid cracking catalyst microspheres having very high zeolite content, e. g., above 50% zeolite. Reference is made to U.S. 4,493,902, Brown et al. Such catalyst are too active for use in FCC units operated in currently known modes. The catalytic activity can be reduced by steaming, resulting in activity adjusted catalysts which are reasonably resistant to the effects of metals. For practical reasons, however, it is preferred to adjust the activity of the high zeolite content microspheres by blending them with fluidizable microspheres having lower cracking activity than the zeolitic microspheres. Because the high zeolite microspheres possess high cracking activity and are also resistant to attrition, relatively large amounts of activity adjusting particles can be blended to provide products operating at exceptionally high but still useful activity levels.

The activity adjusting particles can be composed in whole or in part of materials having desired specific functional roles, such as activity maintenance in the presence of metals or control of sulfur oxide emissions. The activity adjusting particles described in '902 patent includes microspheres composed of calcined kaolin clay, hereinafter CKC, as well as microspheres composed of calcined alumina or mixtures containing cerium and calcined alumina. U.S. 4,606,813 describes blends of such high zeolite content microspheres with specific alumina-based blending particles for reducing the concentration of sulfur oxides in emissions from FCC regenerators.

It has recently been found that particles composed of catalytically active microspheres containing high levels, above 50%, of zeolite and CKC microspheres are prone to deactivation by vanadium and also suffer a loss in selectivity. Similar effects of vanadium have been noted in commercial trials using unblended zeolitic cracking catalyst containing conventional levels of zeolite, e.g., about 20 - 30% zeolite. When operating with feedstocks in which large amounts of vanadium (e.g., more than 5ppm) are contained in the feed, it has been found that the affinity for vanadium of many blending agents is unexpectedly low, relative to that of the zeolitic microspheres. Thus, vanadium appears to migrate from the blending microspheres to the zeolitic microspheres, resulting in the concentration of vanadium on the zeolitic microspheres. It has been concluded that the migration of vanadium originally deposited on the non-zeolitic blending particles to the zeolitic particles results in accelerated deactivation of the catalyst. It is well known that FCC units are operated under variable conditions in the riser cracker (reactor) and the regenerator. It has been found that the operating conditions of an FCC unit will influence the rate and extent of the redistribution of vanadium between non-zeolitic microspheres and zeolitic microspheres. For example, extensive redistribution appears to occur when the partial pressures of steam and oxygen in the regenerator is substantial. There is also evidence that vanadium in the plus 5 oxidation state is both the predominant migrating vanadium species and it is the species primarily responsible for the destruction of zeolite. Therefore, operating conditions which are conducive to the formation of V + 5 tend to result in both catalyst deactivation in the absence of blending particles and increased migration of vanadium from the blending particles to the zeolitic component.

It has long been known that the adverse effect of vanadium in coal fired boilers can be controlled by introducing materials such as compounds of magnesium or calcium to form high melting alkaline earth metal vanadates that are more readily tolerated in the operation of the boiler. This general concept of converting vanadium to innocuous high melting compounds has been proposed for use in FCC units to minimize the detrimental effects of vanadium. Thus, it has been proposed to include various alkaline earth compounds in the circulating catalyst inventory and there has been some commercial practice of this technology. It has also been suggested that alumina, in particular alumina in a form unassociated chemically with silica or other materials, will minimize the adverse effects of vanadium. Materials included in the circulating catalyst inventory for such purpose have either been components of the microspheres containing the zeolites or they have been present in microspheres separate from the zeolite microspheres but blended therewith. Such materials are frequently called "vanadium traps" or "vanadium sinks". Among the materials suggested as vanadium sinks in FCC operations are compounds of magnesium, calcium, and mixtures thereof in the forms of oxides or materials thermally convertible to oxides such as the carbonates or nitrates. Magnesium - containing clays have also been suggested, the clays being high surface area materials such as sepiolite.

One of the problems that can be experienced when an additive is introduced in the circulating catalyst inventory for any specific purposes, such as activity adjustment, is that selectivity may be impaired. Some materials which offered initial promise as vanadium sinks were found to increase coke and/or hydrogen when the circulating catalyst inventory contained, as the cracking component, high zeolite content microspheres of the '902 patent. An increase in coke is undesirable unless the increase is needed to maintain the FCC unit in heat balance. Increases in coke or hydrogen, generally result in the loss of the quantity of transportation fuel products and or the quality of such products. An increase in hydrogen can result in intolerable demands on the gas compressors used in FCC operations. Whether or not a vanadium sink is present in additive particles or is present in the matrix that includes the active cracking component, it is desirable that the circulating inventory in the FCC unit has adequate attrition resistance. Introduction of any functional component in circulating catalyst inventory can present formidable problems in providing such component in the form of attrition-resistant particles which also effectively serve their intended specific function.

## THE INVENTION

The present invention provides novel metallo silicate (or metallo aluminum silicate) compositions for maintaining the activity and selectivity of cracking catalysts used in cracking hydrocarbon feedstocks containing metals such as vanadium, nickel, iron, and copper. According to the present invention, the novel compositions for protecting cracking catalysts against the effects of such metals comprise at least one low surface area, precalcined anhydrous metallo-silicate or metallo-aluminum silicate, preferably those in which the metal is magnesium, iron or a mixture thereof, in a porous matrix. Preferred silicates that are crystalline are selected from the group consisting of olivines (of which forsterite is the magnesium end member, and fayalite is the iron end member); enstatite, cordierite and sapphirine. Low surface area amorphous metallo silicates (amorphous to x-ray), obtained by calcining hydrated crystalline silicates such as sepiolite are also within the scope of the invention.

Cracking catalyst compositions of the invention comprise a component characterized by the ability to crack hydrocarbons in the absence of added hydrogen, preferably crystals of synthetic faujasite (zeolite Y), and one or more of the aforementioned calcined metallo silicates (or aluminum silicates).

In one embodiment of the invention, the cracking catalyst component, preferably crystals of zeolite and the metallo silicate or aluminum silicate component are present in separate and distinct attrition-resistant particles. In other words, the metallo silicate or aluminum silicate is present in particles used as blending agents. In another embodiment of the invention, the metallo silicate or aluminum silicate is present in the same particles that contain the cracking catalyst component. In other words, the cracking component, preferably zeolite crystals, and the metallo silicate or aluminum silicate, such as forsterite crystals, are confined in the same matrix material. In still another embodiment of the invention, the crystals of metallo silicate or aluminum silicate such as forsterite are present both in the particles containing the cracking component, such as zeolite crystals as well as in separate particles which do not contain the cracking component.

Hereinafter, for the sake of simplicity, the metallo silicate or aluminum silicate will be frequently referred to as "the metals tolerant component".

In one preferred embodiment of the invention, wherein the metals tolerant component is present in separate porous particles, the metals tolerant component is crystallized in situ by reacting an iron or basic magnesium compounds (or mixtures of iron and basic magnesium compound) with kaolin clay at controlled elevated temperature, producing attrition-resistant, low surface area particles (in the range of about 2 to 20 $m^2$/g by the BET method) having inclusions of metallo-silicate crystals such as forsterite crystals in amorphous (non-crystalline) silica-alumina derived from the clay or in mullite derived from the clay.

It is well known that a low dispersion of nickel is desirable in order to minimize the deleterious selectivity effects associated with this contaminant metal. One method for achieving this is to cause the nickel or a portion of the nickel present in the oil feedstock to deposit on low surface area particles. At surface areas below 20 $m^2/g$ the contaminant coke and hydrogen yields due to nickel on a particle decrease very rapidly. A similar selectivity trend is also observed for contaminant vanadium, copper, and iron although the main problem with vanadium is still activity loss.

In contrast, it has generally been believed that a high surface area is desirable for trapping vanadium on a particle surface, which then reduces its ability to migrate and destroy zeolite. One of the surprising aspects of this invention is that the metals tolerant component remains highly active towards vanadium trapping, and reduces the vanadium selectivity effects even in a very low surface area particle. Thus, by incorporating this functionality into a low surface area component a bifunctional cracking catalyst component has been made. This bifunctional component reduces vanadium activity and selectivity effects by interaction with the metals tolerant component, and reduces nickel, copper, and iron contaminant effects as a result of its low surface area.

The porosity of the non-zeolitic vanadium sink particles provides the conduit for the vanadium to interact with the metals tolerant component. If the porosity is too low, access to the metals tolerant component by vanadium is severely limited. Without access, the metals tolerant component is of no value. If the porosity of the particle is too high, then the structural integrity of the particle is degraded and the in unit attrition is high. High attrition can not only make it difficult to maintain sufficient vanadium sink in the unit to be effective, but also can degrade petroleum product quality and cause unit operation difficulties. The preferred pore volume (as measured by mercury porosimetry) between 600 and 20,000 angstroms diameter is from 0.05 to 0.50 cc/g, and more preferably from 0.15 to 0.35 cc/g.

In still another embodiment of the invention, porous particles such as microspheres containing one or more metals tolerant components but not containing a cracking component are provided by mixing the particles of a suitable metallo silicate or aluminum silicate with matrix precursor material to form microspheres or the like and then calcining them to harden the particles and place the metallo silicate or aluminum silicate in calcined form.

It was unexpected to the inventors to find that magnesium silicate in crystals such as those of forsterite, enstatite or cordierite would be effective in maintaining the activity of high activity zeolite cracking catalyst when present in porous low surface area particles. These metallo silicate crystals have virtually zero surface area. The prior art (U.S. 4,465,779 and U.S. 4,465,588) teaches that it is "essential" to utilize magnesium or calcium as metals passivators in the form of particles having a surface area in the range of 30 to 1,000 $m^2/g$. For example, sepiolite having a surface area of 173 $m^2/g$ was used in an illustrative example. It was also surprising that iron-contaminated naturally occurring forsterite and fayalite, an iron silicate of the formula $Fe_2SiO_4$, would be effective because the adverse effect of iron on selectivity has been extensively documented. For example, the patent literature directed to the synthesis of zeolite cracking catalysts from kaolin clay frequently explicitedly expresses a need to use kaolin clay that has a low content of iron impurity.

In another preferred embodiment of the invention, the metals tolerant component and the cracking component are present in the same particles. The preferred method for making the particles is by modification of the in situ process for producing zeolitic processing that is described in U.S. No. 3,647,718, incorporated herein by cross-reference, or by in situ processing described in U.S. 4,493,902, the teachings of which are also incorporated herein by cross-reference. The latter procedure is especially preferred when very high activity cracking components are desired. Modification of these procedures, according to the present invention, comprises adding finely divided crystals of the metallo silicate or metallo aluminum silicate to the clay material before forming the particles into microspheres by spray drying, calcining the resulting microspheres, crystallizing zeolite Y in situ by reaction of the calcined microspheres with sodium hydroxide solution (in the case of the process of the '718 patent) or alkaline sodium silicate solution (in the case of the process of '902 patent), and ion-exchanging to reduce sodium oxide content, using, for example, solutions of ammonium, rare earth salts or combinations of such salts. The prior art sepiolite, cannot be used in practice of this aspect of the invention because the amount of zeolite that will crystallize when sepiolite is used will be significantly reduced such that the crystallized particles will not have acceptable cracking activity.

## DESCRIPTION OF PREFERRED EMBODIMENTS

The following description matter makes reference to the embodiment of the invention in which the species of the metals tolerant component is forsterite and the cracking component is a zeolite. It will be understood that the invention is not limited to these specific materials.

The optimum amount of forsterite to be included in the circulating catalyst inventory will depend largely on the following: whether the forsterite is present in the same particles as the zeolite or in separate particles; the amount of vanadium in the feedstock to be cracked; the resulting vanadium loading on the bulk equilibrium catalyst; the blend ratio between the zeolitic particles and the non-zeolitic vanadium immobilization particles; the average age of the metals; the distribution of the vanadium; and the unit operating condition.

When forsterite is the metals tolerant component in microspheres and is formed by an in situ process, some guidelines can be specified in determining the optimum composition. Benefits have been seen with microspheres containing as little as 10% MgO (volatile free weight basis). To optimize performance, the microspheres containing forsterite should be prepared such that they contain 20% MgO or greater. Since attrition resistance decreases and the cost to produce the microspheres increases as the amount of MgO is increased, the preferred range is 20 to 25% MgO (volatile free weight basis).

## I. Preparation of Non-Zeolitic Particles Containing Forsterite

It is within the scope of the invention to mix finely divided forsterite crystals with one or more inorganic oxides or precursor thereof and to form shaped particles, such as spray drying to produce microspheres, which are subsequently calcined. Non-limiting examples of inorganic oxides are silica, alumina, and silica-alumina, preferably kaolin clay. Recommended is the use of well crystallized forsterite having a surface area below 2 m²/g, preferably below 1 m²/g and employed in amount to result in particles having a surface below about 20 m²/g and containing from about 2 to 90%, preferably 10 to 70% and most preferably about 15 to 50% forsterite.

Most preferably, forsterite is formed in situ by reaction at high temperatures between a mixture of basic magnesium compound and silica-alumina, preferably kaolin clay, the mixture having been formed into particles of desired size and shape prior to reaction. This results in reacted particles having the desirable combination of porosity, surface area and acceptable attrition resistance. The preferred range of porosity is between 0.05 and 0.5 cc/g, preferably between 0.15 and 0.35 cc/g, as measured by mercury porosimetry in the range between 600 and 20,000 angstroms diameter. The reaction product is heterogeneous, being composed of inclusions of forsterite crystals in silica-alumina. The quantity of forsterite that is crystallized will depend on the amount of magnesium compound, temperature and atmosphere of the heat treatment, as well as the duration of heat treatment. Kaolin clay is used as the source of silica which is converted to forsterite. High temperature magnesia phases, such as cordierite, tend to form at temperatures in excess of that required to form forsterite. Present experience indicates that cordierite, a magnesium alumino silicate, is also effective in binding vanadium under conditions prevailing in an FCC unit. However, in preparing cordierite-containing microspheres by this in situ procedure, steps must be taken to ensure that sufficient porosity is maintained to permit access by the vanadium to the cordierite. Recommended for example, is the presence of a carbon burn-out agent in the microspheres.

To prepare microspheres from a finely divided magnesium compound and hydrated kaolin clay, a mixture of the finely divided material is formed into an aqueous slurry. A dispersant such as sodium silicate, or a phosphate salt is added to produce a slurry that is sufficiently low in viscosity to be sprayed-dried to form the mixture into the microspheres. The slurry should contain a sufficiently high level of solids to facilitate the formation of microspheres, which are dense and, consequently hard. Both magnesium oxide (or hydrated oxide) and magnesium carbonate can be used as magnesium sources. Magnesium oxide (or hydrated oxide) imparts greater attrition resistance to the calcined microsphere, but difficulties in slurry handling result when the magnesium level (expressed as MgO) is above about 20%. Above this level the preferred sole or partial source of magnesium is magnesium carbonate. Blends of magnesium oxide and magnesium carbonate can be used to balance slurry handling with attrition resistance. Conventional spray dryers of the nozzle or spray wheel design can be used to form the microspheres. The spray dryer can be operated over a wide range of slurry solids levels but preferably solids are in the range of 50 to 60%. After spray drying, microspheres of suitable particle size distribution are recovered. Typically the average particle size is in the range of 60 to 80 microns. Spray dried microspheres, prior to calcining to generate forsterite, are composed of a mechanical mixture of hydrated kaolin clay and magnesium oxide and/or carbonate.

Firing temperature and time vary with the equipment being used. In muffle furnaces, temperatures of 1800°F to 2000°F have been used at times of the order of 1 to 2 hours. When using rotary calciners furnace temperatures of 2200 – 2500°F are used.

It should be noted that a quantitative determination of the amount of forsterite in fired microspheres could not be measured for materials prepared by this in situ procedure because of a lack of a standard that could be used to employ x-ray diffraction as a quantitative tool.

II. Preparation of Microspheres Containing Both Crystals of Zeolite and Crystals of Forsterite

It is within the scope of the invention to incorporate finely divided crystals of forsterite with zeolite crystals and conventional inorganic oxide catalyst matrix precursors and form the resulting mixture into porous particles, preferably microspheres, and then calcine the microspheres. The forsterite level should be sufficiently high so as to significantly affect the vanadium, but not so high as to prevent adequate zeolite growth or limit porosity to unacceptably low levels. The amount of forsterite in the particles should be from 1 to 90%, preferably 5 to 80%, and most preferably 10 to 70% by weight.

We prefer to incorporate forsterite crystals into particles also containing zeolite crystals by modification or known in situ procedures in order to retain the benefits of such in situ procedures (attrition-resistance, bottoms cracking, etc.) while achieving the added benefit of having forsterite crystals in close proximity to the zeolite crystals, as a result of which the forsterite appears to provide better protection against the adverse effects of vanadium. The forsterite should be well crystallized whereby it has a low surface area, generally 2 m²/g or below as determined by the BET method using nitrogen as the adsorbate. Average particle size of the crystals should be below 10 microns, preferably less than 5 microns, and, most preferably, below 2 microns.

In an especially preferred embodiment of this aspect of the invention, finely divided (minus 325 mesh) forsterite crystals are included with the clay-derived calcined microspheres which are reacted with sodium silicate solution in the presence of seeds to crystallize high levels (40% or more) of sodium zeolite Y. This is a modification of the process described in the '902 patent and results in high zeolite level content microspheres containing a vanadium sink within the microspheres. A presently preferred embodiment of this procedure is described in detail in the accompanying illustrative examples.

Another embodiment of this aspect of the invention, involves improvements in the process for making fluidizable zeolitic cracking catalysts by the in situ procedures described in U.S. Patent No's. 3,647,718 and 3,657,154, the entire disclosures of which are incorporated herein by cross-reference. In accordance with this embodiment of the invention, a fluidizable zeolitic cracking catalyst is prepared by the steps of: (a) forming a slurry of powdered forsterite and powdered hydrous kaolin clay, spray drying the slurry to form microspheres, and calcining the microspheres at a temperature and for a time sufficient for the clay to undergo the characteristic exothermic reaction (at about 1800°F), (b) mixing these microspheres with metakaolin in the form of a powder or microspheres, preferably the latter, and sodium hydroxide solution to form a slurry; (c) aging the slurry from step (b); and (d), heating the slurry from step (c) until crystals of zeolite of the faujasite type form in the microspheres in said slurry, the faujasite preferably having a $SiO_2/Al_2O_3$ molar ratio (as determined by x-ray) of 4.5 or above, most preferably above 4.7; (e) recovering microspheres containing zeolite from step (d) and (f) ion-exchanging the recovered microspheres to replace sodium with one or more desired cations such as ammonium, rare earth or combinations thereof. Typically, about 20-25% sodium zeolite Y is crystallized by this procedure. Optionally, the catalyst particles can be subjected to the silica-retention step described in the '902 patent. It is also within the scope of the invention to provide stabilized (dealuminated) forms of the zeolite in such catalysts.

In the applications with high zeolite catalysts, such as described in the '902 patent, the weight ratio of zeolite containing particles to additive particles varies from 1:0 to 1:4, depending on the activity of the zeolite containing particles.

The preferred zeolite-containing catalysts may include any zeolite, whether natural, semi-synthetic, or synthetic alone or in admixture with other materials which do not significantly impair the suitability of the catalyst, provided the resultant catalyst has suitable activity and pore structure. For example, if the virgin catalyst is a mixture, it may include the zeolite component associated with or dispersed in a porous refractory inorganic oxide carrier; in such case the catalyst may for example contain about 1% to about 60%, more preferably about 15 to about 50%, and most typically about 20 to 45% by weight, based on the total weight of catalyst (water free basis) of the zeolite, the balance of the catalyst being a porous refractory inorganic oxide alone or in combination with any of the known adjuvants for promoting or suppressing various desired and undesired reactions. For a general explanation of the genus of zeolite, molecular sieve catalysts useful in the invention, attention is drawn to the disclosure of the articles entitled "Refinery Catalysts Are a Fluid Business" and "Making Cat Crackers Work on Varied Diet", appearing respectively in the July 26, 1978 and September 13, 1978 issues of Chemical Week magazine. The descriptions of the aforementioned publications are incorporated herein by reference.

For the most part, the zeolite components of the zeolite-containing catalysts will be those which are known to be useful in FCC cracking processes. In general, these are crystalline alumino silicates, typically made up of tetra coordinated aluminum atoms associated through oxygen atoms with adjacent silicon atoms in the crystal structure. However, the term "zeolite" as used in this disclosure contemplates not only alumino silicates, but also substances in which the aluminum has been partly or wholly replaced, such as for instance by gallium, phosphorus, boron, iron, and/or other metal atoms, and further includes substances in which all or part of the silicon has been replaced, such as for instance by germanium or phosphorus. Titanium and zirconium substitution may also be practiced.

Most zeolites are prepared or occur naturally in the sodium form, so that sodium cations are associated with the electrongative sites in the crystal structure. The sodium cations tend to make zeolites inactive and much less stable when exposed to hydrocarbon conversion conditions, particularly high temperatures. Accordingly, the zeolite may be ion exchanged, and where the zeolite is a component of a catalyst composition; such ion exchanging may occur before or after incorporation of the zeolite as a component of the composition. Suitable cations for replacement of sodium in the zeolite crystal structure include ammonium (decomposable to hydrogen), hydrogen, rare earth metals, alkaline earth metals, etc. Various suitable ion exchange procedures and cations which may be exchanged into the zeolite crystal structure are well known to those skilled in the art.

Examples of the naturally occurring crystalline alumino silicate zeolites which may be used as or included in the catalyst for the present invention are faujasite, mordenite, clinoptilolite, chabazite, analcite, and erionite.

Examples of the synthetic crystalline alumino silicate zeolites which are useful as or in the catalyst for carrying out the present invention are Zeolite X, U.S. 2,882,244; Zeolite Y, U.S. 3,130,007; and Zeolite A, U.S. Patent 2,882,243; as well as Zeolite B, U.S. Patent No. 3,008,803; Zeolite D, Canada Patent No. 661,981; Zeolite E, Canada Patent No. 614,495; Zeolite F, U.S. Patent No. 2,996,358; Zeolite H, U.S. Patent No. 3,010,789; Zeolite J, U.S. Patent No. 3,011,869; Zeolite L, Belgian Patent No. 575,177; Zeolite M, U.S. Patent No. 2,995,423; Zeolite O, U.S. Patent No. 3,140,252; Zeolite Q, U.S. Patent No. 2,991,151; Zeolite S, U.S. Patent No. 3,054,657; Zeolite T, U.S. Patent No. 2,950,952; Zeolite W, U.S. Patent No. 3,012,853; Zeolite Z, Canada Patent No. 614,495; and Zeolite Omega, Canada Patent No. 817,915. Also ZK-4HJ and ZSM-type zeolites are useful. Moreover, the zeolites described in U.S. Patent Nos. 3,140,249; 3,140,253; 3,944,482; and 4,137,151 are also useful, the disclosures of said patents being incorporated herein by reference.

The crystalline alumino silicate zeolites having a faujasite-type crystal structure are particularly preferred for use in the present invention. This includes particularly natural faujasite and zeolite X and zeolite Y.

Different laboratory test methods have been found to generate different quantitative results of the effectiveness of vanadium immobilizers. We have found that while several laboratory scale tests give similar directional or comparative results, to achieve good predictions of commercial performance 1 to 20% oxygen should be present during a hydrothermal deactivation step. It is believed that this occurs because vanadium in the plus five oxidation state is the mobile species while vanadium in lower oxidation states is less mobile or immobile so the presence of conditions favoring $V + 5$ such as steaming in the presence of oxygen are desirable to better simulate mobile species. Other variables such as the amount of vanadium, and the presence or absence of sulfur ($SO_2$) will affect the results. Consequently, depending on the test conditions, varying degrees of the detrimental effects of vanadium are noted. A laboratory test that has been found to be particularly useful is described below. During testing of mixtures of zeolite-containing particles and additive particles, it is preferable to impregnate metals on unmixed zeolite containing particles and unmixed additive particles rather than on a preblended mixture. The separately impregnated particles are then dried in air at 600°F and calcined at 1100°F; thereafter they are blended. After calcining and blending, the vanadium impregnated catalytic composition is subjected to a hydrothermal deactivation step commonly referred to as steaming. The preferred vanadium bearing solutions are solutions of vanadium naphthenates in organic solvents or mixtures of vanadium and nickel naphthenates. Simultaneous impregnation upon a mixture of zeolite containing particles and additive particles seems to provide significantly less meaningful results. Typically, preferred steaming conditions consist of a 4 hour treatment at a temperature between about 1300 and about 1550°F in the presence of 10% air and at least 20% steam. After steaming, well known microactivity tests can be used to determine activity and selectivity of the steamed catalysts in comparison to controls not containing vanadium.

EXAMPLE I

Preparation of Forsterite in Particles Adapted to be Blended with Particles of Zeolitic Cracking Catalyst

A slurry of hydrous clay (ASP®600 supplied by Engelhard Corporation) and water was made down in a propellor agitated vessel using tetrasodium pyrophosphate (ca. 10#./T) as the dispersant. Finely divided magnesium carbonate (Magnesite®33) was slowly added to this slurry. The resulting slurry (60% solids) contained 20% MgO on a volatile free weight basis, and had a viscosity less than 1000 cps.

The slurry was spray dried after screening to remove any agglomerates. Spray dryer conditions were as follows: inlet temperature = 325-350°C; outlet temperature = 120-130°C; pressure = 40 psig; pump rate = 1.0.

The spray dried microspheres were of a particle size typical for FCC catalyst. The spray dried microspheres were then calcined in air in a muffle oven. Calcination was at 1800°F for 1 hour. The crystalline phases present were forsterite and periclase.

To test the performance of the microspheres containing forsterite crystals disseminated in silica-alumina material (hereinafter FM), a blend of rare earth form high zeolite content microspheres (HAC) and FM (37% HAC/63% FM) was steamed at 1450°F for 4 hours with 10% air. The HAC catalyst microspheres were prepared substantially as described in EXAMPLE I of the '902 patent except that ion-exchange was carried out by the procedure described in EXAMPLE II of this application. Also, the seeds used in the crystallization were "quenched" seeds; see U.S. 4,631,262 to Altomare, the disclosure of which is incorporated herein by cross reference. The activity and selectivity were evaluated on a MAT unit. The results of this test were used as the baseline for activity maintenance testing as well as to show that FM did not deactivate the HAC. A sample of FM was then heat treated at 1100°F for 1 hour and impregnated with metals by an incipient wetness procedure using nickel and vanadium naphthenates dissolved in cyclohexane. After impregnation, the sample contained about 5000 ppm of vanadium and 2500 ppm of nickel. This sample was blended with a sample of HAC that was similarly impregnated in the same ratio as in clean testing. The blend was steamed at 1450°F for 4 hours with 10% air, and then tested on the MAT unit. Typical results for such a blend indicate that ca. 55% of the activity of the clean blend is retained. Some selectivity improvement is seen in terms of hydrogen and coke make.

The performance of FM in the presence of sulfur was also tested using an "equilibrium sulfation test." The equilibrium sulfation test consisted of the following steps: presulfation of the components (8 hrs, 1350°F, 98.7% air, 1.3% SO$_2$); impregnation with metals (5000 ppm V, 2500 ppm Ni); blending of the components; steaming of the blend (1400°F, 89.9% steam, 10% air, 0.1% SO$_2$); analysis on a MAT unit. MAT testing was carried out using a mid-continent feedstock, catalyst to oil ratio of 5.0, weight hourly space velocity of 15, and initial reactor temperature of 910°F

A calcium based material obtained using calcium carbonate instead of magnesium carbonate in admixture with ASP®600 clay, followed by spray drying and calcination, had been found to perform poorly in this test because the calcium sulfated irreversibly. The magnesium based vanadium sink (FM) was substantially less affected by the presence of sulfur.

Example II

Preparation of Cracking Catalyst Containing Zeolite Crystals & Forsterite Crystals in Same Particles

Pursuant to a modification of the process of the '902 patent, a slurry containing forsterite was made down on a drill press using a shear mixer. The slurry was made up of: 166.7 g natural forsterite, 375.1 g of SATINTONE® No. 1 calcined kaolin clay, (kaolin clay calcined to undergo the exotherm) 375.1 g of ASP®-600 kaolin clay, 130.3 g of N® Brand sodium silicate solution, 1354.4 g of deionized water. The forsterite was a well crystallized material having a surface area of 1.1 m$^2$/g.

Before being added to the slurry, the forsterite was ground to -325 mesh (four passes through micropulverizer 0.020 screen). The chemical analysis of this forsterite was as follows:

|       | Wt.% |
|-------|------|
| MgO | 48.7 |
| $SiO_2$ | 40.3 |
| $Fe_2O_3$ | 11.4 |
| CaO | 0.07 |
| $Na_2O$ | 0.02 |

The slurry was spray dried in the Stork Bowen nozzle dryer to form microspheres. Spray dryer conditions were as follows: inlet temp = 325°C; outlet temp = 120°C; pressure = 40 psig; pump rate = 1.0.

The spray dried product was then muffle calcined at 1350°F for 2 hours (tray rotated after 1 hour) to convert the hydrous kaolin to metakaolin. The calcined microspheres contained 7.7% MgO. Analysis by mercury porosimetry indicated that the volume of macropores (pores greater than 600 angstroms diameter) was 0.45 cc/g.

The calcined microspheres were then used to crystallize sodium zeolite Y. The following materials were added in the order given to 3 liter Pyrex resin kettle reactor fitted with a condenser with agitation: 1618.2 g of N-Brand sodium silicate solution, 366.3 g of quenched seeds, 260.4 g of NaOH solution (25.13%), 1073.6 g of deionized water, 246.0 g of microspheres.

The quenched seeds used had an analysis of 13.5% $Na_2O$, 16.7% $SiO_2$, 0.62% $Al_2O_3$, and 33.0% $H_2O$.

The crystallization reactor was heated and maintained at 210°F with stirring. After 19 hours, the crystallization was terminated. At this point, the microspheres contained 55% zeolite Y as determined by standard x-ray analysis with a unit cell size corresponding to a $SiO_2/Al_2O_3$ ratio of 4.91 using the Stamires correlation, 6.24% MgO and 9.5% $Na_2O$ by chemical analysis.

The crystallized microspheres containing both forsterite and zeolite Y were then exchanged to reduce the $Na_2O$ level and to add rare earth. The exchanges were completed by a procedure involving rare earth exchange followed by calcination followed by ammonium exchange. For the rare earth exchange, 96.69 g of rare earth nitrate (27.5% REO) solution was added to 1676 g of deionized $H_2O$ and heated to 200°F. The catalyst prepared above (394 as is grams, 305.7 volatile free grams) was slowly added to the solution, while continually adjusting the pH to 3.5 using nitric acid. Because the amount of rare earth exchanged onto the catalyst was lower than desired (7.19% REO) a second rare earth exchange was completed using 12.8 g of rare earth nitrate solution and 222.5 g of water. After the exchange, the catalyst was filtered and washed with water (2X the catalyst's weight), and then oven dried. At this point, the rare earth content of the sample was 9.44%, expressed as oxide. Next, the sample was calcined at 1000°F for 1 hour. The tray was rotated halfway through the calcination. Following calcination the sample was ammonium exchanged using 329.7 g of 54% ammonium nitrate solution mixed with an equal weight of water. This solution was placed in a beaker, covered with foil, and heated to 200°F with stirring. The catalyst was then slowly added and the pH adjusted to 3 using nitric acid. The sample was again covered and maintained at 200°F for 15 minutes with stirring. The sample was filtered and washed with water (2X catalyst weight). This was repeated for a total of 6 exchanges. The catalyst was then oven dried overnight. At this point, the catalyst contained 0.28% $Na_2O$, 9.14% REO, and 6.12% MgO.

To test the activity of this catalyst, a sample was steamed at 1500°F for 4 hours. MAT results on this sample showed a conversion of 81%, indicating that the sample has about twice the activity of ULTRASIV® 260 cracking catalyst. A clean blend (no metals added) of 62% catalyst/38% FM was steamed at 1450°F and then tested on the MAT. Conversion was 71.3%.

To test the metals tolerance of this blended catalyst, the sample was heat treated at 1100°F for 1 hour and then impregnated with metals by an incipient wetness procedure using nickel and vanadium naphthenates dissolved in cyclohexane. After impregnation, the sample contained 5000 ppm of vanadium and 2500 ppm of nickel. This sample was blended with FM that was similarly impregnated, in a 65/35 catalyst-FM ratio. This blend was steamed at 1450°F for 4 hours with 10% air in the steamer. MAT evaluation showed conversion of 67.5% or activity maintenance of 80% compared with 55% activity maintenance for a blend of the rare earth exchanged zeolitic catalyst microspheres of the '902 patent (HAC) with FM (Example I) blended to the same initial activity (30% HAC/70% FM). The selectivities were at least comparable to an HAC blend which contained 70% FM.

## EXAMPLE III

This example illustrates the preparation of nonzeolitic microspheres containing various silicate minerals within the scope of the invention and the use of such particles as additives to high zeolite content, catalytically active microspheres as vanadium sink particles.

The procedures for the preparation and testing of the microspheres as vanadium sink additives is as follows:

Samples of forsterite, enstatite, fayalite, cordierite, and sepiolite, were ground to minus 325 mesh. Each of the minerals was separately mixed with hydrous kaolin clay and incorporated into microspheres by spray drying. Slurries of the hydrous clay (ASP-600) and water were made down on a drill press, using TSPP (ca. 10 lbs./T) as the dispersant. Each slurry contained one of the mineral components listed above except for the control. Two levels were used so that the resulting slurries (@ 60% solids) contained either 20% or 40% of that mineral on a volatile free weight basis. In a control test, the procedure was repeated without adding any metals tolerant component to the hydrous kaolin clay.

The amounts used for preparation of vanadium sink additives containing metals tolerant components were as follows:

(for 20% level)
   1000.0 g ASP-600 kaolin clay
   215.0 g metals tolerant component
   6.1 g TSPP
   810.0 g water

(for 40% level)
   1000.0 g ASP-600 clay
   573.3 g metals tolerant component
   7.9 g TSPP
   1048.9 g water

After screening to remove any agglomerates each slurry was spray dried on a Stork Bowen nozzle dryer. Spray dryer conditions are as follows: Inlet temperature = 325-350°C; outlet temperature = 120-130°C; pressure = 40 psi; pump rate = 1.0. The resulting spray dried microspheres were of a particle size typical for FCC catalysts. The spray dried microspheres were then calcined in air in a muffle oven at 1800°F for 1 hour. Except for control microspheres (calcined clay without added metals tolerant component), and microspheres containing fayalite and sepiolite, the presence of the crystalline silicates could be detected by a standard x-ray procedure. In the preparation using sepiolite, the sepiolite had apparently been converted during the calcination to one or more x-ray amorphous materials. Thus, sepiolite was not present in the vanadium sink particles in the original crystalline form. In the case of fayalite, a portion of the fayalite was decomposed and the only detectable crystalline phase was hematite.

The calcined microspheres were characterized in terms of their particle size distribution, EAI, bulk density, magnesium content, and whether other crystalline phases were present. The tests for measuring EAI (Engelhard Attrition Index and bulk density) appear in the '902 patent. Results are summarized in TABLE I.

To test the performance of these additive microspheres as vanadium trapping materials, a blend of HAC and the each additive (37% HAC 12/63% additive) was steamed at 1450°F for 4 hours with 10% air in the closed system steamer (see the '902 patent) and then run on the MAT unit. The results of this test were used as the baseline for activity maintenance testing as well as to see if the additive deactivated the HAC.

To test the metals tolerance, a sample of each additive was heat treated at 1100°F for 1 hour and impregnated with metals at two levels by the incipient wetness procedure using nickel and vanadium naphthenates dissolved in cyclohexane. After impregnation, samples of each additive contained nominally 7000 ppm vanadium/3500 ppm of nickel and 3500 ppm vanadium/1750 ppm nickel. Each sample was blended with similarly impregnated HAC in the same ratio as in clean testing, described hereinabove. The blends were steamed at 1450°F for 4 hours with 10% air, and then tested on the MAT unit.

Typical results for a blend such as these containing FM (EXAMPLE I), indicate that ca. 55% of the activity of the clean blend was retained. Some selectivity improvement was seen in terms of hydrogen and coke make. Due to variability in the activity of duplicate samples following steaming, it is difficult to confidently differentiate among the materials in regards to activity or selectivity with the exception of cordierite. However, all of these materials imparted vanadium resistance greater than particles containing no metals tolerant component. The cordierite containing sample had better coke and hydrogen selectivity than the other materials.

## EXAMPLE IV

This example illustrates the incorporation of various metallo silicates and metallo aluminum silicates into high zeolite content microspheres of the '902 patent.

Minus 325 mesh samples of enstatite, fayalite, cordierite and sepiolite were obtained. Each was separately incorporated into microspheres. The following procedure was used.

Slurries of hydrous clay (ASP 600), calcined clay (SATINTONE®1) and water were made down on a drill press, using sodium silicate (N®Brand) as the dispersant/binder. Each slurry contained one of the mineral components listed above. Only one addition level was used so that the resulting slurries (@ 50% solids) contained about 20% of that mineral on a volatile free basis.

The amounts used are as follows:

505.7 g ASP-600 hydrous kaolin clay
505.7 g SATINTONE 1 calcined kaolin clay
266.0 g mineral component
222.5 g N-Brand sodium silicate solution
1224.0 g water

After screening to remove any agglomerates each slurry was spray dried on the Stork Bowen nozzle dryer. Spray dryer conditions were:

Inlet temp = 325-350°C
Outlet temp = 120-130°C
Pressure = 40 psi
Pump rate = 1.0

The resulting spray dried microspheres were of a particle size typical for FCC catalysts. The spray dried microspheres were then calcined in a muffle oven at 1350°F for 2 hours, rotating trays midway through the calcination.

The calcined microspheres were characterized in terms of their particle size distribution, magnesium content, and whether other crystalline phases are present. Apparently, neither fayalite nor sepiolite survived the calcination.

Each of these calcined microspheres were then used to crystallize zeolite Y. The following materials were added to a 1 liter Pyrex resin kettle reactor fitted with a condenser and agitator:

519.1 g N-Brand
175.0 g quenched seeds
70.8 g NaOH (24.6%)
251.0 g H$_2$O
82.0 g of microspheres

The crystallization results were as follows:

| Additive to Precursor Microspheres | Zeolite Y (% By x-ray) | Crystallization Time (Hours) |
|---|---|---|
| Enstatite | 43 | 17 |
| Fayalite | 44 | 24 |
| Cordierite | 43 | 24 |
| Sepiolite | 0 | 24 |

EXAMPLE V

This example illustrates further the preparation of zeolitic cracking catalyst particles containing crystals of zeolite as a vanadium sink. A slurry containing forsterite was made down on a drill press using a shear mixer. The slurry was made up of:

900.0 g of natural forsterite

1714.3 g of SATINTONE 1

1714.3 g of ASP-600

1714.6 g of N-Brand sodium silicate solution

4148.1 g of deionized $H_2O$

Before being added to the slurry, the forsterite was ground so that most of it was minus 325 mesh (four passes through micropulverizer 020 screen). The chemical analysis of this forsterite is as follows.

% MgO      48.4

% $SiO_2$      40.3

% $Fe_2O_3$      11.0

% CaO      0.11

% $Na_2O$      0.02

The slurry was spray dried in the Stork Bowen nozzle dryer to form microspheres. Spray dryer conditions were as follows:

Inlet temp = 375°C

Outlet temp = 120°C

Pressure = 40 psi

Delta P = 6

Pump rate = 1.0

Nozzle = 06

The spray dryer product was then muffle calcined at 1350°F for 2 hours (tray rotated after 1 hour) to convert the hydrous kaolin to metakaolin. The calcined microspheres contained 9.7% MgO and 0.37 cc/g of macropores (600 to 20,000 angstroms).

The calcined microspheres were then used to crystallize zeolite Y. The following materials were added in the order given to a 18 liter Pyrex resin kettle reactor fitted with a condenser and agitator:

8229.6 g of N-Brand sodium silicate

2774.4 g of quenched seeds

1123.0 g of NaOH (24.59%)

4124.6 g of deionized $H_2O$

1300.0 g of microspheres

The crystallization reactor was heated and maintained at 210°F with stirring. After 24 hours, the crystallization was terminated. At this point, the microspheres contained 45% zeolite Y with a $SiO_2/Al_2O_3$ ratio of 4.68, and 8.68% MgO.

From this material, two catalysts a REY version and a stabilized Y version, were prepared.

12

REY

The crystallized microspheres containing both forsterite and zeolite Y were exchanged to reduce the $Na_2O$ level and to add rare earth. For the rare earth exchange, 319.4 g of rare earth nitrate (27.5% REO) solution was added to 5534 g of deionized $H_2O$ and heated to 200°F. The catalyst (sodium form precursor) prepared above (1045 as is grams, 888 volatile free grams) was slowly added with stirring, while continually adjusting the pH to 3.5 using nitric acid. The slurry was covered and maintained at 200°F for 15 minutes with stirring. Because the amount of rare earth exchanged onto the catalyst was lower than desired (7.74% REO) a second rare earth exchange was completed using 66.9 g of rare earth nitrate solution and 1160 g of $H_2O$. After the exchange, the catalyst was filtered and washed with $H_2O$ (2 x the catalyst's weight), and then oven dried. At this point, the rare earth content of the sample was 8.25%. Next, the sample was calcined at 1000°F for 1 hour. Following calcination the sample was ammonium exchanged using 938.6 g of 54% ammonium nitrate mixed with an equal weight of water. This solution was placed in a beaker, covered with foil, and heated to 200°F with stirring. The catalyst was then slowly added and the pH adjusted to 3 using nitric acid. The sample was again covered and maintained at 200°F for 15 minutes with stirring. The sample was filtered and washed with $H_2O$ (2 x catalyst weight). This was repeated for a total of 5 exchanges. The catalyst was then oven dried overnight.

At this point the catalyst contained 0.37% $Na_2O$, 8.06% REO and 8.67% MgO.

To test the hydrothermal stability of this catalyst, a sample was steamed at 1450, 1500, and 1550°F for 4 hours. MAT results on these samples showed conversions of 87, 81, and 32% respectively, indicating that this REY version has about twice the activity of ULTRASIV® 260 catalyst at least through 1500°F steaming. However, the activity is lower than would be expected based on the zeolite content of the fresh catalyst. A clean blend of 70% catalyst/30% FM was steamed at 1450°F with 10% air in a closed system steamer and tested on the MAT. Conversion was 82%.

To test the metals tolerance of the catalyst, the catalyst was heat treated at 1100°F for 1 hour and then impregnated with metals to two levels by the incipient wetness procedure using nickel and vanadium naphthenates dissolved in cyclohexane. After impregnation, one sample contained nominally 7000 ppm of vanadium and 3500 ppm of nickel. The second sample contained nominally 3500 ppm vanadium and 1750 ppm nickel. Each sample was blended with FM (EXAMPLE I), the vanadium sink additive that was similarly impregnated, in a 70/30 catalyst-FM ratio. Each blend was steamed at 1450°F for 4 hours in closed system steamers with 10% air in the steamer. MAT evaluation showed average conversion of 68.5% (48% activity maintenance) for the higher metals level and 74.4% conversion (64% activity maintenance) for the lower level. This material had better activity and selectivity than any of the other materials tested at comparable metals levels, including the HAC/FM and HAC/RCKC materials, which were among the best materials heretofore tested by the applicants. The data are shown in TABLE II.

Dealuminated Y

To prepare a dealuminated version, the following procedure was used. In the first ammonium exchange, 1275 g of 54% ammonium nitrate were mixed 1700 g of water. This solution was placed in a beaker, covered with foil, and heated to 200°F while stirring. The catalyst (1000 g as is) was slowly added, while continually adjusting the pH to 3.2 using nitric acid. The slurry was covered and maintained at 200°F for 15 minutes. The $Na_2O$ was lower than desired, so sodium was exchanged back onto the catalyst. To do this, 22.6 g of sodium nitrate were mixed with 5964 g of water and heated to 180°F. The catalyst was slowly added and the pH maintained between 3.5 and 4.5 using nitric acid. The slurry was allowed to mix for 15 minutes. Then it was filtered, washed (2 x catalyst weight) and oven dried. The sample contained 3.02% $Na_2O$. The catalyst was then calcined at 700°F for two hours with 121.8 g of water added to the tray, followed by a second calcination at 1100°F for two hours with 262 g of water added to the tray. Following this calcination, the sample was again ammonium exchanged. Ammonium nitrate (690 g) was mixed with 1380 g of water and heated to 180°F. The catalyst (726 as is grams) was added and the pH was adjusted to 3.2 using nitric acid. After filtering and washing the product, this exchange procedure was repeated. At this point, the $Na_2O$ level was .43%. As the final step in the procedure, the catalyst was calcined at 900°F for two hours with 76.8 g of water added to the tray. The sample contained 6.7% MgO. Unit cell was 24.60 angstroms.

To test the hydrothermal stability of this catalyst, a sample was steamed at 1450, 1500, and 1550°F for 4 hours. MAT results on these samples showed conversions of 78, 69, and 62% respectively, indicating that the dealuminated version is at least as active as ULTRASIV 260 catalyst. However, the activity is lower than would be expected based on the zeolite content of the fresh catalyst. A clean sample was also steamed at 1450°F with 10% air in a closed system steamer and then tested on the MAT. Conversion was 78%.

To test the metals tolerance of this catalyst, the catalyst was heat treated at 1100°F for 1 hour and then impregnated with metals to two levels by the incipient wetness procedure using nickel and vanadium naphthenates dissolved in cyclohexane. After impregnation, one sample contained nominally 7000 ppm of vanadium and 3500 ppm of nickel. The second sample contained nominally 3500 ppm vanadium and 1750 ppm nickel. Each sample was steamed at 1450°F for 4 hours (closed system steamer) with 10% air in the steamer. This catalyst has better activity than the HAC/FM, HAC/RCKC, and ULTRASIV®260 at comparable metals levels. The data are shown in TABLE II.

Data based on studies of FM suggest that both zeolitic and non-zeolitic materials disclosed will be useful for SOx reduction in FCC units. The catalyst particles containing both the metals tolerant component and rare earth Y zeolite should be especially advantageous because both rare earth (particularly cerium) and magnesium will be present on the same particle.

## TABLE I

### Chemical and Physical Properties of Vanadium Sink Additives

| Vanadium Tolerant Component | % Magnesium (as MgO) | Surface Area, $m^2/g$ BET (1) | Macropore Volume cc/g | Hardness (EAI) | Bulk Density (g/cc) |
|---|---|---|---|---|---|
| **0% (wt.)** | | | | | |
| Cordierite | 4.3 | 12.3 | .222 | 2.4 | 0.94 |
| Enstatite | 5.7 | 9.3 | .131 | 2.4 | 0.97 |
| Sepiolite | 4.8 | 21.4 | .266 | 2.8 | 0.80 |
| Forsterite | 10.2 | 9.6 | .219 | 1.9 | 0.96 |
| Fayalite | 0.6 | 8.9 | .202 | 2.5 | 0.99 |
| **10% (wt.)** | | | | | |
| Cordierite | 3.2 | 4.7 | .212 | 0.9 | 1.04 |
| Enstatite | 10.5 | 9.7 | .204 | 2.2 | 1.01 |
| Sepiolite | 9.8 | 16.1 | .264 | 1.4 | 0.81 |
| Forsterite | 12.4 | 12.2 | .287 | 3.8 | 0.89 |
| Fayalite | 1.5 | 7.3 | .170 | 1.3 | 1.16 |

(1) Nitrogen Adsorbate

TABLE II

| Catalyst | V PPM | Ni PPM | Conversion wt.% | Coke Factor[1] | $H_2$, wt.% |
|---|---|---|---|---|---|
| Forsterite | 3415 | 2400 | 73.93 | 1.40 | 0.55 |
| REY | 6790 | 4050 | 68.45 | 1.37 | 0.45 |
| Forsterite | 3590 | 2440 | 70.24 | 1.66 | 0.86 |
| Dealuminated Y | 6730 | 4120 | 63.92 | 1.63 | 0.87 |
| HAC/FM | 3550 | 2280 | 68.00 | 1.58 | 0.54 |
|  | 6830 | 3515 | 49.17 | 1.53 | 0.60 |
| HAC/RCKC[2] | 3825 | 1845 | 71.00 | 1.64 | 0.64 |
|  | 5073 | 2480 | 68.62 | 1.71 | 0.69 |
|  | 6915 | 2980 | 52.59 | 1.65 | 0.68 |
| ULTRASIV®260 | 3190 | 1790 | 67.90 | 1.66 | 0.72 |
|  | 4910 | 2370 | 60.28 | 1.98 | 0.85 |
|  | 6950 | 3290 | 52.80 | 2.40 | 0.98 |

(1) Coke Factor [=]

$$\text{Coke Factor} = \frac{\text{Coke Make at Given Conversion}}{\text{Coke Make of Reference Catalyst (HFZ®-20) at Same Conversion}}$$

(2) RCKC = Microspheres of hydrous kaolin clay calcined to undergo the exotherm; thereafter impregnated with mixed rare earth nitrate solution and then calcined at about 1000 F; REO content about 5 wt.%.

## Claims

1. A catalyst composition comprising one component which is capable of cracking petroleum feedstock and a second component which is at least one low surface area anhydrous, calcined metallo silicate or metallo aluminum silicate that is present in porous particles in amount sufficient to improve the metals tolerance of said component capable of cracking petroleum feedstock.

2. The composition of claim 1 wherein the component capable of cracking petroleum feedstock and said anhydrous silicate or aluminum silicate are contained in separate particles.

3. The composition of claim 1 wherein the component capable of cracking petroleum feedstock and metallo silicate or metallo-aluminum silicate are contained in the same particles.

4. The composition of claim 3 wherein said cracking component is a zeolitic molecular sieve that is contained in the same particles as said anhydrous silicate or aluminum silicate and said anhydrous silicate or aluminum silicate is also present in particles that do not contain crystals of zeolitic molecular sieve.

5. The composition of claim 1 wherein said zeolitic molecular sieve is of the Y type.

6. The composition of claim 1 wherein the metallo-moiety of said metallo - silicate or aluminum silicate is magnesium, iron or combinations thereof.

7. The composition of claim 1 wherein said metallo-silicate or aluminum silicate is olivine, cordierite, enstatite or sapphirine.

8. The composition of claim 2 wherein said particles containing metallo - silicate or aluminum silicate have a BET surface area below 20 $m^2/g$.

9. A method for catalytically cracking hydrocarbon feedstock contaminated with vanadium which comprises utilizing as the catalyst the composition of claim 1.

10. The method of claim 9 wherein said feedstock is also contaminated with sulfur.

15

11. A method for catalytically cracking hydrocarbon feedstock contaminated with at least one metal selected from the group consisting of nickel, copper and iron which comprises utilizing as the catalyst the composition of claim 1.

12. Fluidizable particles useful in the catalytic cracking of metal-contaminated petroleum feedstock with a zeolitic molecular sieve cracking catalyst which comprise porous microspheres in which forsterite crystals are present as an inclusion in alumina-silica derived from calcined kaolin clay, said microspheres having a surface area below about 20m$^2$/g and having been prepared by calcining a mixture of kaolin clay and a basic magnesium compound.

13. The composition of claim 12 wherein said microspheres have a surface area below 10 m$^2$/g.

14. The composition of claim 12 wherein said microspheres have a porosity in the 600 to 20,000 angstrom pore diameter range from 0.15 to 0.35 cc/g.

15. Fluidizable particles useful in the catalytic cracking of metal - contaminated petroleum feedstock with a zeolitic molecular sieve cracking catalyst which comprise porous microspheres in which cordierite crystals are present as an inclusion in alumina-silica derived from calcined kaolin clay, said microspheres having a surface area below about 20 m$_2$/g and having been prepared by calcining a mixture of kaolin clay and a basic magnesium compound.

16. An in situ process for preparing a vanadium resistant cracking catalyst which comprises forming microspheres composed of a mixture of hydrous and kaolin clay calcined to undergo the exotherm and particles of at least one anhydrous metallo-silicate or metallo-aluminum silicate, calcining said microspheres at a temperature above 1350°F to convert said hydrous kaolin to metakaolin, immersing said microspheres in a sodium silicate solution and heating until crystals of sodium zeolite Y crystals form, thereby forming microspheres containing both crystals of sodium zeolite Y and said anhydrous metallo-silicate or metallo silicate.

17. The process of claim 16 wherein said silicate is selected form the group consisting of forsterite, fayalite, cordierite and enstatite.

18. An in situ process for preparing a vanadium resistant cracking catalyst which comprises forming microspheres composed of a mixture of hydrous kaolin clay and crystals of at least one anhydrous metallo silicate or metallo-aluminum silicate, heating said microspheres at a temperature of at least 1800°F until said kaolin clay undergoes a characteristic exothermic reaction, mixing said microspheres with metakaolin, immersing said mixture in a sodium hydroxide solution to form a slurry, and aging and heating said slurry until crystals of sodium zeolite Y form.

19. The process of claim 18 wherein said silicate is selected from the group consisting of forsterite, fayalite, cordierite and enstatite.